# EUROPEAN PATENT SPECIFICATION

(11) **EP 2 172 821 B1**
(45) Date of publication and mention of the grant of the patent: **17.01.2018**
(21) Application number: 09171781.9
(22) Date of filing: 30.09.2009
(51) Int. Cl.: G06F 21/62

(54) **Aggregation server with industrial automation control and information visualization placeshifting**
Aggregationsserver mit industrieller Automatisierungssteuerung und Informationsanzeigen-Placeshifting
Serveur d'agrégation avec contrôle des automatismes industriels et changement de place de visualisation d'informations

(30) Priority: 30.09.2008 US 242212
(43) Date of publication of application: 07.04.2010
(73) Proprietor: Rockwell Automation Technologies, Inc., Mayfield Heights, OH 44124 (US)
(72) Inventor: Baier, John Joseph, Mentor, HI 44060 (US)
(74) Representative: Grünecker Patent- und Rechtsanwälte PartG mbB

(56) References cited:
- EP-A1- 1 903 411
- US-A1- 2004 162 887

## Description

### TECHNICAL FIELD

The subject specification relates generally to industrial control system information presentation and in particular to securely presenting information over a network.

### BACKGROUND

Industrial control environments can typically involve complex mechanical, electronic, electro-mechanical, and/or robotic machinery that perform various automated mechanical and/or electrical functions. Such machinery can include industrial motors, pumps, conveyors, escalators, drills, refrigeration systems, and so on, that can provide a particular physical output. Typically, an industrial environment utilizes one or more control devices to determine when to activate or deactivate such machinery, as well as an appropriate level of activation, (e.g., an amount of current to supply a variable input motor). Additionally, the control devices are associated with logical program code that can determine an appropriate time, degree, manner, *etc*., to operate such machinery based on various determinable circumstances (*e.g*., output of another device, reading of an optical sensor, electronic measurement such as current level in a device, movement or number of rotations of a device, and so on).

Different controls can be used to provide protective features in an industrial environment. Current systems and methods, however, require people to be physically located at plants where these controls reside in order to monitor such systems. Accessing these systems via VPN-type connections is also undesirable since such a method requires users to have a fully configured VPN connection at every computer they wish to use. Accordingly, there is currently a need for a method and system for remotely visualizing control monitors from a computer without having to install specialized software.

EP 1 903 411 A1 relates to a proxy server comprising an interface component that receives data from a programmable logic controller, other factory controllers, or smart devices on the factory floor. A mapping component communicatively coupled to the interface component converts the data into data structured in accordance with a hierarchical data model. The proxy server can further be employed to convert data from a plurality of industrial automation devices and controllers connected over industrial automation communication networks as well as provide uniform security features to such devices.

### Summary of the Invention

It is the object of the present application to provide an improved method for viewing of visualization data from outside a protected network without compromising security.

This object is solved by the subject matter of the independent claims.

Preferred embodiments are defined by the dependent claims.

### SUMMARY

The following discloses a simplified summary of the specification in order to provide a basic understanding of some aspects of the specification. This summary is not an extensive overview of the specification. It is intended to neither identify key or critical elements of the specification nor delineate the scope of the specification. Its sole purpose is to disclose some concepts of the specification in a simplified form as a prelude to the more detailed description that is disclosed later.

In an embodiment, a method for facilitating viewing visualization data is provided. The method includes aggregating at least one visualization dataset from within a protected network and converting each of the at least one visualization datasets into a web-based file, where each of the web-based files includes at least one of the visualization datasets. The method further includes storing each of the at least one visualization datasets and each of the web-based files within the protected network, where each of the at least one visualization datasets and each of the web-based files are inaccessible from outside the protected network. The method also includes sending a request to a host via the internet, the request requesting the host to send a reply corresponding to a desired visualization dataset, and receiving the reply from the host. And finally, the method includes pushing a desired web-based file and the desired visualization dataset out of the protected network via the internet as a function of the reply, where the desired web-based file is directed to the host and where the desired web-based file includes the desired visualization dataset.

In another embodiment, a system for facilitating viewing visualization data is also provided. Within such embodiment, the system includes an aggregation component and a push component, each within a protected network. The aggregation component is configured to receive at least one visualization dataset from within the protected network and to convert each of the visualization datasets into a web-based file, such that each of the web-based files includes at least one of the visualization datasets. The aggregation component is further configured to store each of the visualization datasets and each of the web-based files within the protected network, such that each of the visualization datasets and each of the web-based files are inaccessible from outside the protected network. The aggregation component is also configured to send a request to a host via the internet, the request requesting the host to send a reply corresponding to a desired visualization dataset. Meanwhile, the push component is configured to receive the reply from the host located outside the protected network. The push component is further configured to upload a desired web-based file and the desired visualization dataset out of the protected network as a function of the reply, such that the desired web-based file is directed to the host and includes the desired visualization dataset.

In yet another embodiment, another system for facilitating viewing visualization data is provided. The system includes means for collecting at least one visualization dataset from within a protected network and means for converting each of the at least one visualization datasets into a web-based file, such that each of the web-based files includes at least one of the visualization datasets. The system also includes means for securing each of the at least one visualization datasets and each of the web-based files within the protected network, such that each of the at least one visualization datasets and each of the web-based files are inaccessible from outside the protected network. The system further includes means for sending a request to a host via the internet, the request requesting the host to send a reply corresponding to a desired visualization dataset, and where the system further includes means for receiving the reply from the host via the internet. And finally, the system includes means for uploading a desired web-based file and the desired visualization dataset onto the internet as a function of the reply, such that the desired web-based file and the desired visualization dataset are directed to the host via a secure connection.

The following description and the annexed drawings set forth certain illustrative aspects of the specification. These aspects are indicative, however, of but a few of the various ways in which the principles of the specification can be employed. Other advantages and novel features of the specification will become apparent from the following detailed description of the specification when considered in conjunction with the drawings.

### BRIEF DESCRIPTION OF THE DRAWINGS

FIG. 1 is a block diagram of a system for uploading aggregated visualization data in accordance with an aspect of the subject specification.
FIG. 2 is a block diagram of a system for uploading visualization data in accordance with another aspect of the subject specification.
FIG. 3 illustrates a representative system for pushing visualization data onto a host in accordance with an aspect of the subject specification.
FIG. 4 illustrates a representative system for pushing visualization data onto a host with a detailed aggregation component in accordance with an aspect of the subject specification.
FIG. 5 illustrates a representative system for pushing visualization data onto a host with a detailed push component in accordance with an aspect of the subject specification.
FIG. 6 illustrates a representative methodology for pushing aggregated visualization data onto a host in accordance with an aspect of the subject specification.
FIG. 7 illustrates a representative methodology for storing visualization data in accordance with an aspect of the subject specification.
FIG. 8 illustrates a representative methodology for dynamically updating visualization data in accordance with an aspect of the subject specification.
FIG. 9 illustrates an example of a schematic block diagram of a computing environment in accordance with an aspect subject specification.
FIG. 10 illustrates an example of a block diagram of a computer operable to execute the disclosed architecture.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It can be evident, however, that the claimed subject matter can be practiced without these specific details. In other instances, well-known structures and devices are shown in block diagram form in order to facilitate describing the claimed subject matter.

As used in this application, the terms "component," "module," "system," "interface," or the like are generally intended to refer to a computer-related entity, either hardware, a combination of hardware and software, software, or software in execution. For example, a component can be, but is not limited to being, a process running on a processor, a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. As another example, an interface can include I/O components as well as associated processor, application, and/or API components.

As used herein, the terms to "infer" or "inference" refer generally to the process of reasoning about or deducing states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, the claimed subject matter can be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks (*e.g*., compact disk (CD), digital versatile disk (DVD)...), smart cards, and flash memory devices (*e.g*., card, stick, key drive...). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications can be made to this configuration without departing from the scope or spirit of the claimed subject matter.

Moreover, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to disclose concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. In addition, it is to be appreciated that an inference or determination in the subject specification can performed through implementation of artificial intelligence techniques.

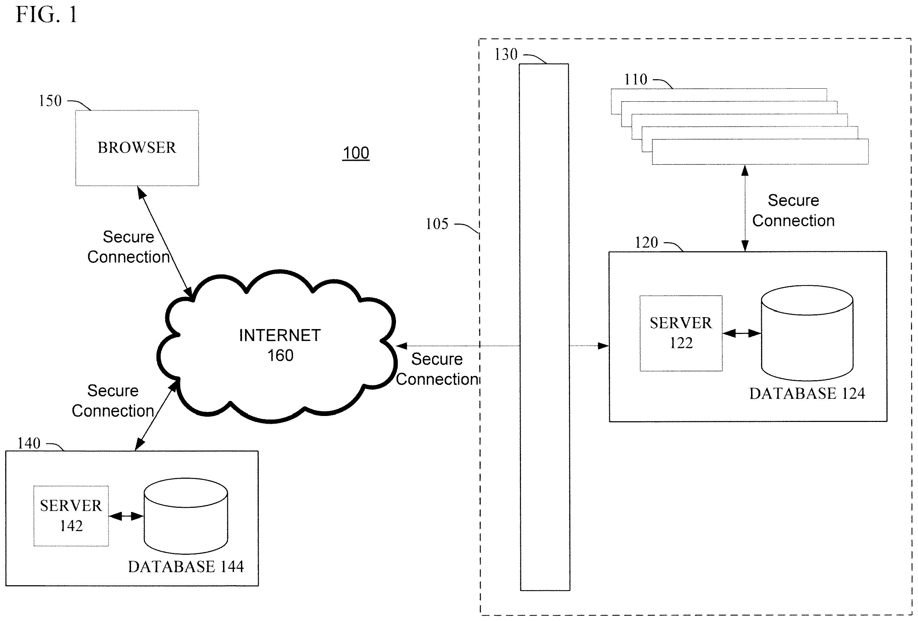

Now referring to FIG. 1, a block diagram of an exemplary system for uploading aggregated visualization data, according to an embodiment, is provided. Here, it should be appreciated that, as used hereinafter, "visualization data" includes any type of viewable data, including graphical and/or operational data for industrial control systems. As illustrated, system 100 includes a protected local network 105, a web host 140, and a browser 150. Within such embodiment, visualization data generated by protected local network 105 is provided to host 140, and subsequently to browser 150, via a series of secure connections over the internet 160, as shown.

As illustrated, protected local network 105 may include a plurality of visualization servers 110, an aggregation appliance 120, and a proxy (e.g., a firewall) 130. Within such embodiment, it should be appreciated that protected local network 105 operates outside of the internet 160, and may include any of a combination of scenarios in which appliance 120 and plurality of servers 110 are, for example, commonly owned/managed and/or located at a common site. Moreover, within such embodiment, it should be appreciated that entities outside of protected local network 105 do not obtain visualization data by actually accessing network 105. Instead, particularly requested visualization data is pushed through proxy 130 onto the internet 160 where it is then sent to host 140, and subsequently to browser 150, via a series of secure connections.

In one aspect, each of visualization servers 110 are configured to provide any of a plurality of types of visualization data. Within such embodiment, visualization servers 110 may be related to a particular industrial plant and/or company. Indeed, in one example, visualization servers 110 may each serve visualization data pertaining to different components of a process chain at a particular plant. In another example, however, visualization servers 110 may each provide data pertaining to the same components of a process chain at different plants. In other embodiments, visualization servers 110 may simply be commonly owned.

In another aspect, aggregation appliance 120 is configured to receive visualization data from visualization servers 110 via a secure connection. As illustrated, appliance 120 may include server 122 coupled to database 124. Within such embodiment, visualization data received from visualization servers 110 is stored as web-based visualization files (which may, for example, include instructions on how to draw vector-based graphics) in database 124, which are pushed through proxy 130 onto host 140 upon a proper request. Moreover, upon a proper request, these visualization files are transferred from aggregation appliance 120 to host 140 where a copy is stored. Any changes made to the transferred visualization file at the source (i.e., within protected local network 105), are detected by the aggregation appliance 120 and forwarded up to the host 140 to ensure that the transferred visualization files on host 140 are in sync with updates to those files on appliance 120.

In an embodiment, once a browser 150 opens a transferred visualization file from host 140, and the corresponding vector graphics are drawn, visualization datasets are continuously pushed from aggregation appliance 120 to host 140, so long as at least one browser 150 has that particular visualization file open for viewing. This step enables the visualization file to appear "live" to the user with real data points coming from within a plant, for example.

Here, it should be appreciated that, both visualization files and visualization datasets may be pushed from aggregation appliance 120 to host 140 using an http request. Within such embodiment, host 140 uses the http reply to send "control information" back to the aggregation appliance 120 indicating any visualization datasets it is interested in for the next update, and to indicate the list of files and version numbers it currently has stored so that aggregation appliance 120 can compare those file versions to the master and send any updated visualization files.

In an embodiment, the reply data may further include a set of security credentials for obtaining the requested data. If the requested data is available, and if the received security credentials are adequate, appliance 120 may then push this data onto the internet 160 through proxy 130. Indeed, instead of granting access to appliance 120, the requested visualization data is provided by pushing the data through firewall/proxy 130 and onto host 140. As such, system 100 provides a mechanism for control operators to obtain visualization data via the internet, without compromising the security of protected local network 105.

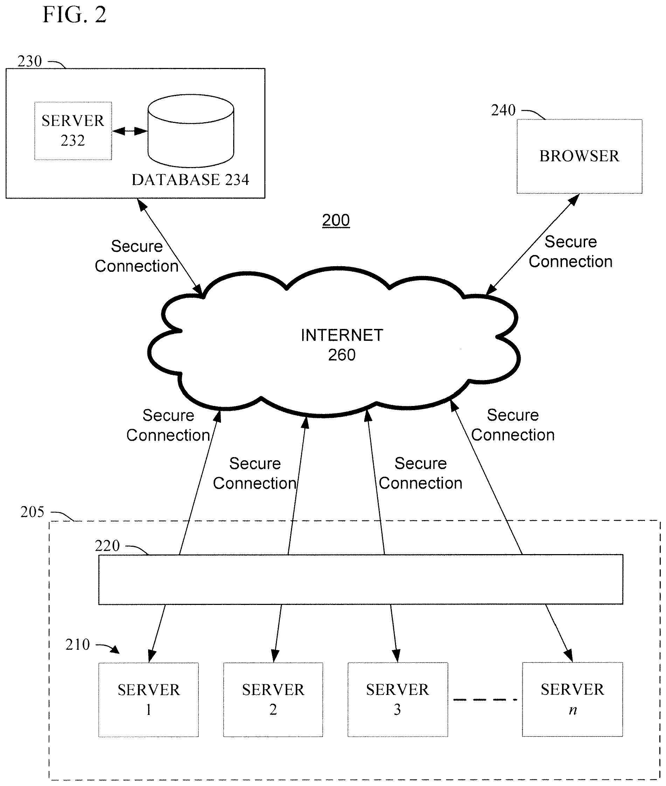

In another embodiment, visualization data is uploaded to a host via the internet directly from the visualization servers. Such a configuration may be advantageous in circumstances where providing an aggregation appliance is either not needed (e.g., where a single, or very few, visualization servers are present) or cost-prohibitive. In FIG. 2, a block diagram of an exemplary system without an aggregation appliance is provided. As illustrated, system 200 includes a protected local network 205, a web host 230, and a browser 240. Within such embodiment, visualization data generated by protected local network 205 is provided to host 230, and subsequently to browser 240, via a series of secure connections over the internet 260, as shown. Here, it should be appreciated that each of visualization servers 210 may function similar to the aggregation appliance. For instance, each of visualization servers 210 may push visualization data through proxy/firewall 220 and onto host 230 via the internet 260 instead of granting actual access to their respective systems. Also, because there is no single aggregation unit, it should be appreciated that each of visualization servers 210 might apply their own algorithms for performing particular functions including collecting/pushing visualization data and/or evaluating security credentials. It should be further appreciated that, although a common proxy/firewall 220 is illustrated, any combination of visualization servers 210 may reside in different protected local networks having a unique proxy/firewall.

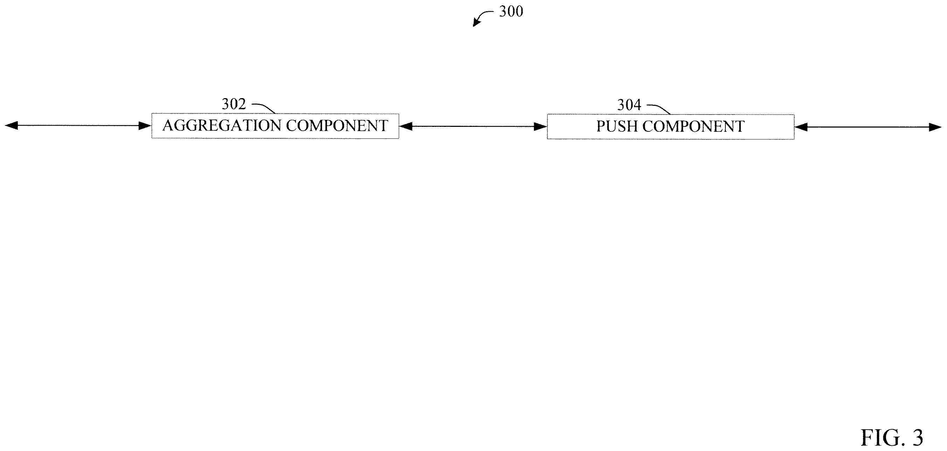

Now referring to FIG. 3, an exemplary system 300 is disclosed for uploading aggregated visualization data onto a host system. As illustrated, such a system may include an aggregation component 302 working together with a push component 304. Within such embodiment, the aggregation component 302 interfaces with a plurality of visualization servers and is configured to receive visualization data from these servers. The push component 304, on the other hand, interfaces with the host system and is configured to upload particular visualization data to the host via the internet.

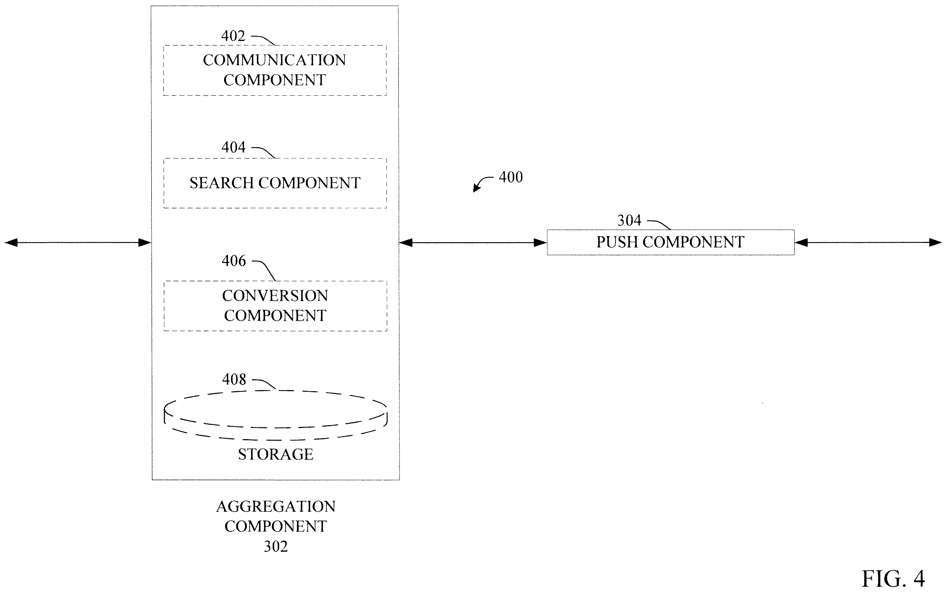

Now referring to FIG. 4, an exemplary system 400 is disclosed for uploading aggregated visualization data onto a host system with an expanded aggregation component 302. As illustrated, aggregation component 302 may be configured to include communication component 402, search component 404, conversion component 406, disclosure component 408, and storage component 410.

In an embodiment, communication component 402 interfaces with the servers providing the visualization data. Communication component 402 can engage with other devices to transfer information. Operation can take place wirelessly, in a hardwired manner, with employment of security technology (*e.g*., encryption), *etc.* Moreover, the communication component 402 can utilize various protective features, such as performing a virus scan on obtained data and blocking information that is positive for a virus.

A search component 404 may be used to locate different servers with which aggregation component 302 can communicate. Search component 404 may also be used to query servers for any updates regarding the status, availability, and/or contents of particular visualization data. In other aspects, the search component 404 may be used to discover resources to be used in operation of the system 400 (*e.g*., available storage space).

Conversion component 406 may be used to convert received visualization data into web-based files. Such conversion may further include assigning a security standard to these files so as to define what security credentials are needed to view each file. Conversion component 406 may also be configured to convert received visualization data into web-based files of various types, as well as to receive visualization data of various formats.

Storage 408 may be used to store received visualization data and/or web-based files that include such data, as well as other types of data. Storage 408 can be configured in a number of different configurations, including as random access memory, battery-backed memory, hard disk, magnetic tape, *etc.* Various features can also be implemented upon storage 408, such as compression and automatic back up (*e.g.,* use of a Redundant Array of Independent Drives configuration).

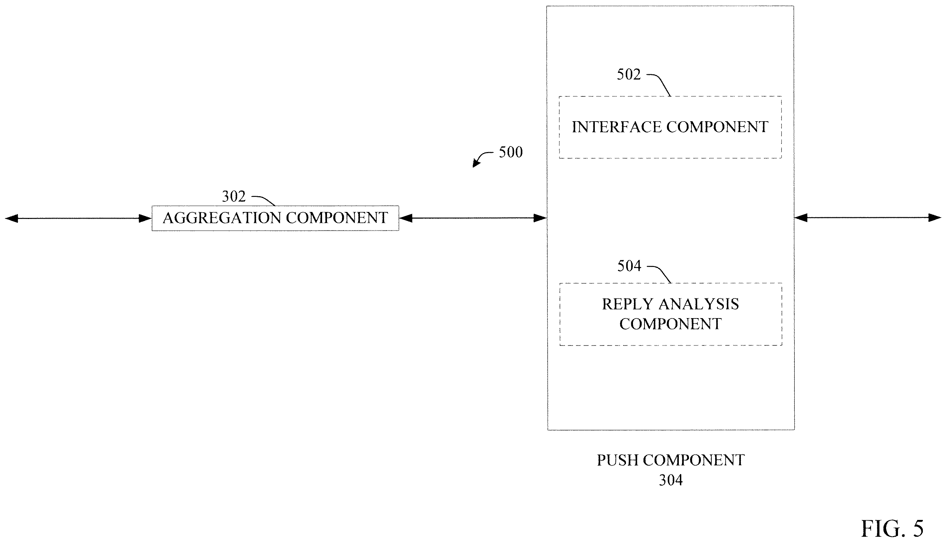

Now referring to FIG. 5, an exemplary system 500 is provided for uploading aggregated visualization data onto a host system with an expanded push component 304. As illustrated in system 500, push component 304 may be configured to include interface component 502 and reply analysis component 504.

In an embodiment, interface component 502 serves as the interface between push component 304 and a host to which data is to be uploaded. In one aspect, interface component 502 may review the security credentials of user's requesting visualization data. Upon a user's security credentials being validated, reply analysis component 504 may then be utilized to determine what data, if any, should be pushed to a host via the internet. Within such embodiment, the host may use the http reply to send "control information" back to push component 304 indicating any visualization datasets it is interested in for an update, and to indicate a list of files and version numbers it currently has stored. The reply analysis component 504 may then compare those file versions to the master and send any updated visualization files. As a result, only a particular set of files are pushed onto the host, as opposed to a larger general set of files from the aggregation component 302 of which a user may have not requested nor be authorized to view.

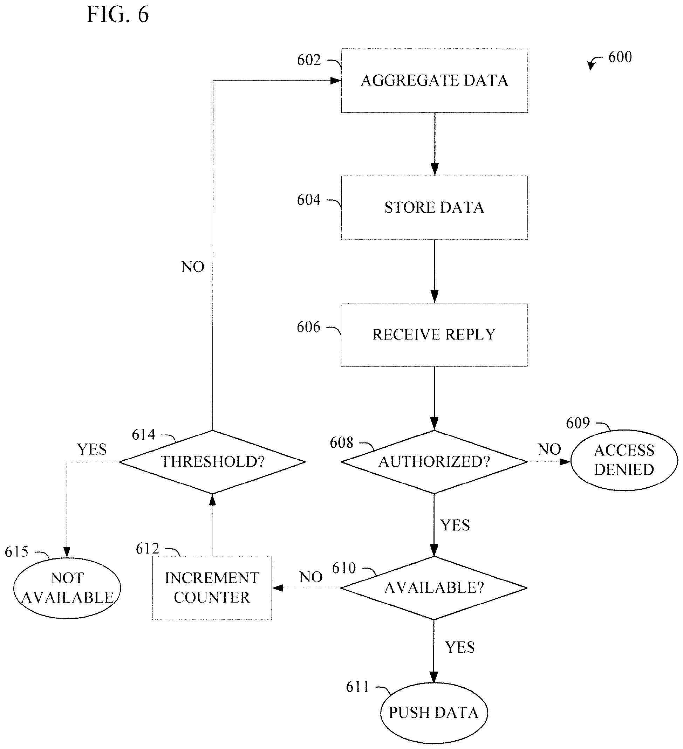

Now referring to FIG. 6, an exemplary methodology for uploading aggregated visualization data to a host, according to an embodiment, is provided. As illustrated, process 600 begins at step 602 where visualization data is aggregated from a plurality of visualization servers. Here, it should be noted that such aggregation step may be performed in many ways. For instance, upon availability, visualization data might be sent unilaterally by the visualization servers to the aggregation appliance. In other embodiments, the visualization data might remain with the visualization servers until the aggregation appliance actually requests them. The system might also be configured to include a combination of such aggregation methods.

Next, at step 604, process 600 continues with a conversion of the visualization data into web-based visualization files. This conversion step may include tagging each of these files with particular security credentials as well as generating the appropriate metadata. Here, it should be appreciated that the visualization data may be received in any of a plurality of formats and that it could be converted into any of a plurality of web-based files.

At step 606, a reply to a request to the host is received in which the reply may correspond to a single file or multiple files. As stated previously, such reply may include a set of security credentials. Accordingly, process 600 continues with an authorization check at step 608. In particular, the authorization check may include reviewing the security credentials of the user. In some embodiments, obtaining different types of visualization data from the aggregation appliance may require providing different security credentials. The actual form of the security credentials could also vary (e.g., passwords, biometric data, etc.). If authorization is denied, process 600 concludes with an "access denied" message being sent at step 609. Otherwise, process 600 continues to step 610.

At step 610, process 600 determines whether the desired visualization data is available. Here, because the desired visualization data may reside with the visualization servers and/or the aggregation appliance, availability step 610 may include an external query of individual visualization servers and/or an internal query of the aggregation appliance. If available, the web-based file(s) corresponding to the desired visualization data is pushed to the host at step 611. Otherwise, process 600 continues at step 612.

In an embodiment, the aggregation appliance is continuously connected to the visualization servers. As such, the availability of visualization data may be continuously monitored. However, in cases where the desired visualization data is never made available, process 600 may need an exit mechanism. In one aspect, an increment counter is provided as a potential solution.

If utilized, process 600 increments a counter at step 612 each time a particular availability search at step 610 fails. After the counter is incremented process 600 continues with a threshold assessment at step 614. Within such threshold assessment, a comparison is made between the incremented count and a threshold value. Here, it should be noted that the threshold value could be manifested in any of a plurality of ways. For example, the threshold value may be a default value provided by the aggregation appliance. In other embodiments, the user might be allowed to set this threshold directly from his/her browser (e.g., setting the threshold so as to monitor the availability of particular data overnight).

If the threshold value has been exceeded, process 600 ends at step 615 where a "data not available" message may be sent. Otherwise, the availability search returns to step 602 where more visualization data is aggregated. The loop then continues until either the data becomes available at step 610, authorization is denied at step 608, or the threshold count value is exceeded at step 614.

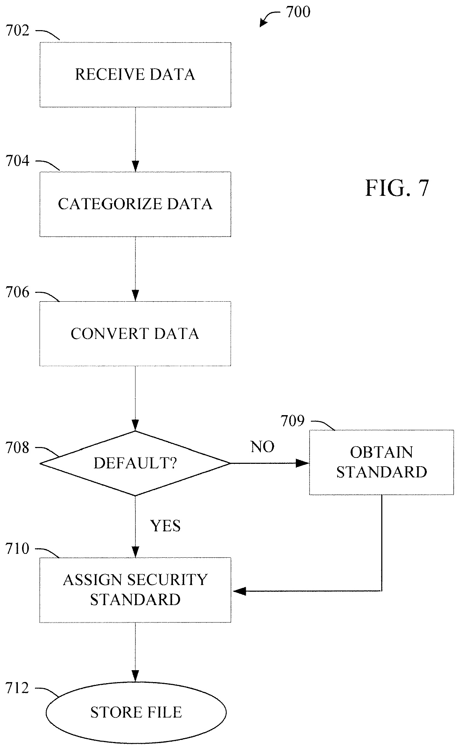

Referring next to FIG. 7, an exemplary methodology for storing web-based files of visualization data in accordance with an embodiment is provided. As illustrated, process 700 begins at step 702 where visualization data is received. Once received, the visualization data may then categorized at step 704. It should be noted that, because an aggregation appliance may be receiving a large volume of visualization data, which may be of different types and from different sources, categorizing such data may be necessary.

Once the received data has been categorized, the data may be converted into a web-based visualization file at step 706. As stated previously, such conversion may require assigning a particular security standard to each file. In one embodiment, a default security standard may be assigned to all files that do not require a specialized standard. Such an embodiment is featured in process 700.

As illustrated, a determination as to whether to assign a default security standard to a file is made at step 708. If no default standard is assigned, process 700 continues to step 709 where the specialized security standard is obtained. Within such embodiment, the specialized security standards might be obtained by referencing a look-up table. In one aspect, web-based files might be assigned security standards according to the categorizations made at step 704. In another aspect, security standards might vary according to the rank/class of the user. Once obtained, the security standard is assigned at step 710 and the file is stored at step 712.

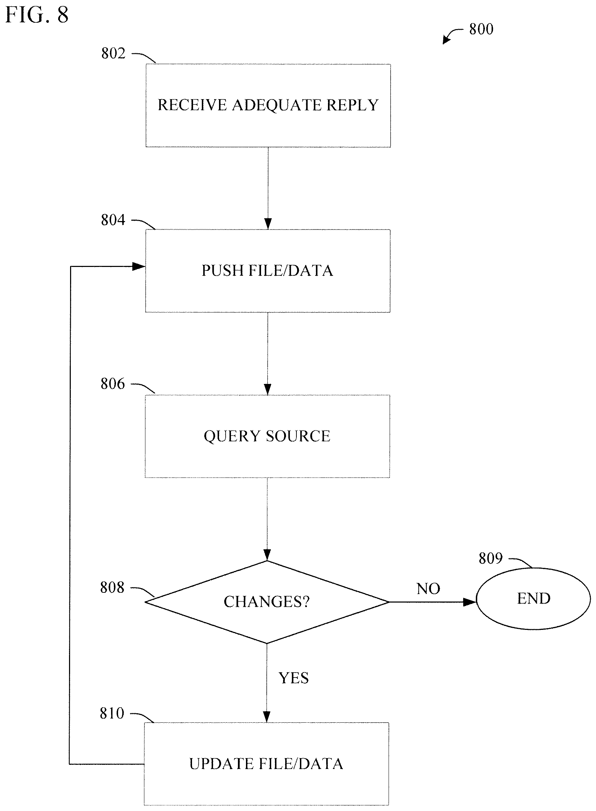

Now referring to FIG. 8, an exemplary methodology for dynamically updating visualization data/file(s) in accordance with an embodiment is provided. As illustrated, process 800 begins at step 802 where an adequate reply from a host for desired visualization data is received. Here, it should be noted that the adequacy of a reply may depend on any of several criteria including the availability of the desired data, as well as the security constraints a file might have. Nevertheless, for this particular example, it is assumed that an adequate reply has been received in which the desired data is available.

After receiving the reply, process 800 continues by pushing a web-based visualization file corresponding to the desired data onto the host at step 804. In an embodiment, the visualization file may be continuously updated as a function of replies received from the host. Moreover, within such embodiment, the aggregation appliance may receive an http reply from the host for "control information" indicating visualization data it would like updated. The aggregation appliance may thus be configured to query the source of the pushed visualization file for updates. Accordingly, for this particular example, process 800 continues at step 806 where the source of the visualization file is queried.

Next, at step 808, a determination is made as to whether any changes have occurred with respect to the pushed data/file(s). In an embodiment, this determination may include receiving from the host a list of files and version numbers it currently has stored so that the aggregation appliance can compare those file versions to a master list and send any updated visualization files. Here, it should be appreciated that such updates may be any of a plurality of types of updates. For instance, some updates might be source-driven changes such as substantive changes to the actual contents being viewed. Other updates, however, might include user-driven changes such as changes of views. Security-driven updates may also occur where, for example, a user's session has expired and/or the user's permission to view data via the system has been revoked. If updates are detected, process 800 continues to step 810 where the data/file is updated accordingly, otherwise the process ends at step 809. Once data has been updated at step 810, process 800 loops back to step 804 where aggregation appliance pushes an updated visualization file onto the host.

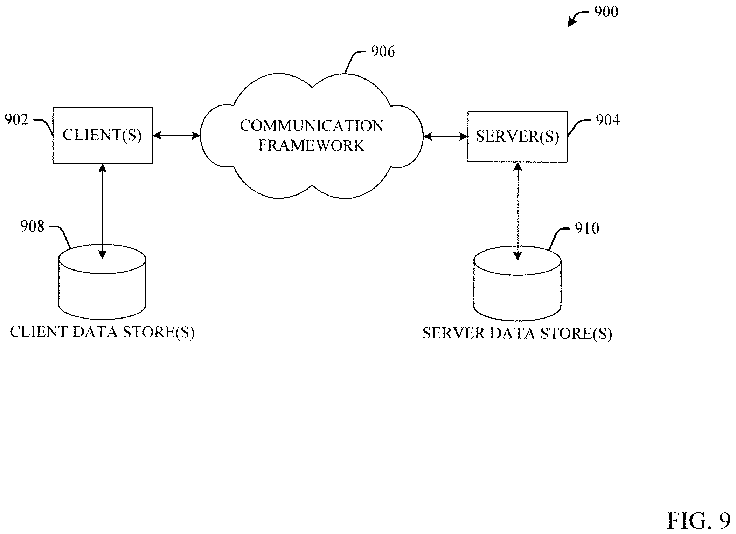

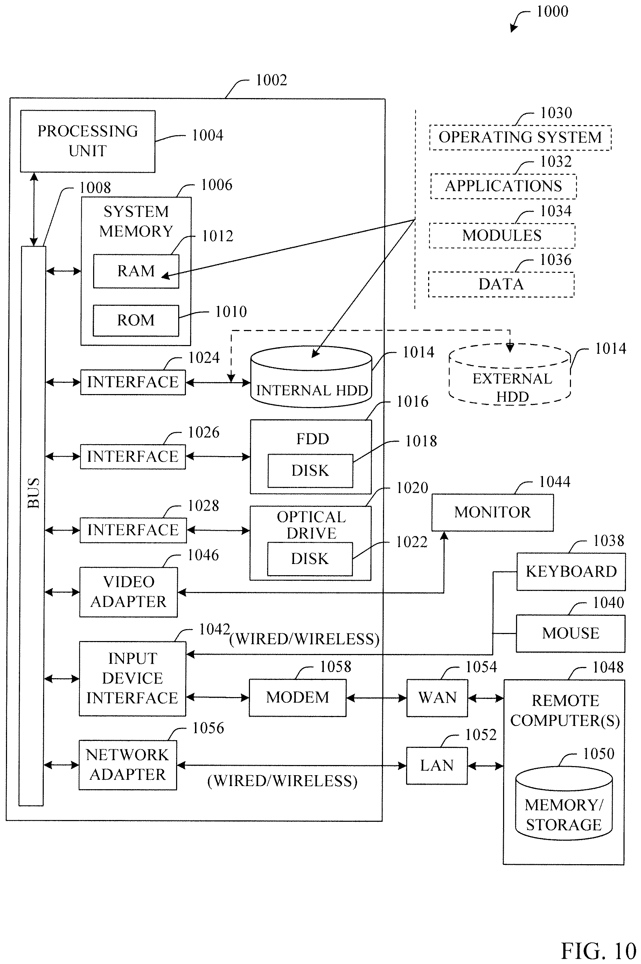

In order to provide a context for the various aspects of the disclosed subject matter, FIGs. 9 and 10 as well as the following discussion are intended to provide a brief, general description of a suitable environment in which the various aspects of the disclosed subject matter can be implemented. While the subject matter has been described above in the general context of computer-executable instructions of a program that runs on one or more computers, those skilled in the art will recognize that the subject matter described herein also can be implemented in combination with other program modules. Generally, program modules include routines, programs, components, data structures, *etc.* that perform particular tasks and/or implement particular abstract data types. Moreover, those skilled in the art will appreciate that the inventive methods can be practiced with other computer system configurations, including single-processor, multiprocessor or multi-core processor computer systems, mini-computing devices, mainframe computers, as well as personal computers, hand-held computing devices *(e.g*., personal digital assistant (PDA), phone, watch...), microprocessor-based or programmable consumer or industrial electronics, and the like. The illustrated aspects can also be practiced in distributed computing environments where tasks are performed by remote processing devices that are linked through a communications network. However, some, if not all aspects of the claimed subject matter can be practiced on stand-alone computers. In a distributed computing environment, program modules can be located in both local and remote memory storage devices.

Referring now to FIG. 9, there is illustrated a schematic block diagram of a computing environment 900 in accordance with the subject specification. The system 900 includes one or more client(s) 902. The client(s) 902 can be hardware and/or software (*e.g*., threads, processes, computing devices). The client(s) 902 can house cookie(s) and/or associated contextual information by employing the specification, for example.

The system 900 also includes one or more server(s) 904. The server(s) 904 can also be hardware and/or software (*e*.*g*., threads, processes, computing devices). The servers 904 can house threads to perform transformations by employing the specification, for example. One possible communication between a client 902 and a server 904 can be in the form of a data packet adapted to be transmitted between two or more computer processes. The data packet can include a cookie and/or associated contextual information, for example. The system 900 includes a communication framework 906 (*e.g.,* a global communication network such as the Internet) that can be employed to facilitate communications between the client(s) 902 and the server(s) 904.

Communications can be facilitated *via* a wired (including optical fiber) and/or wireless technology. The client(s) 902 are operatively connected to one or more client data store(s) 908 that can be employed to store information local to the client(s) 902 (e.g., cookie(s) and/or associated contextual information). Similarly, the server(s) 904 are operatively connected to one or more server data store(s) 910 that can be employed to store information local to the servers 904.

Referring now to FIG. 10, there is illustrated a block diagram of a computer operable to execute the disclosed subject matter. In order to provide additional context for various aspects of the subject specification, FIG. 10 and the following discussion are intended to provide a brief, general description of a suitable computing environment 1000 in which the various aspects of the specification can be implemented. While the specification has been described above in the general context of computer-executable instructions that can run on one or more computers, those skilled in the art will recognize that the specification also can be implemented in combination with other program modules and/or as a combination of hardware and software.

Generally, program modules include routines, programs, components, data structures, *etc*., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the specification can also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer-readable media can comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disk (DVD) or other optical disk storage, magnetic cassettes, magnetic tape, magnetic disk storage or other magnetic storage devices, or any other medium which can be used to store the desired information and which can be accessed by the computer.

Communication media typically embody computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared and other wireless media. Combinations of the any of the above should also be included within the scope of computer-readable media.

With reference again to FIG. 10, the example environment 1000 for implementing various aspects of the specification includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors or proprietary specific configured processors. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes read-only memory (ROM) 1010 and random access memory (RAM) 1012. A basic input/output system (BIOS) is stored in a non-volatile memory 1010 such as ROM, EPROM, EEPROM, which BIOS contains the basic routines that help to transfer information between elements within the computer 1002, such as during start-up. The RAM 1012 can also include a high-speed RAM such as static RAM for caching data.

The computer 1002 further includes an internal hard disk drive (HDD) 1014 (*e.g.,* EIDE, SATA), which internal hard disk drive 1014 can also be configured for external use in a suitable chassis (not shown), a magnetic floppy disk drive (FDD) 1016, (*e.g.,* to read from or write to a removable diskette 1018) and an optical disk drive 1020, (*e.g*., reading a CD-ROM disk 1022 or, to read from or write to other high capacity optical media such as the DVD). The hard disk drive 1014, magnetic disk drive 1016 and optical disk drive 1020 can be connected to the system bus 1008 by a hard disk drive interface 1024, a magnetic disk drive interface 1026 and an optical drive interface 1028, respectively. The interface 1024 for external drive implementations includes at least one or both of Universal Serial Bus (USB) and IEEE 1394 interface technologies. Other external drive connection technologies are within contemplation of the subject specification.

The drives and their associated computer-readable media provide nonvolatile storage of data, data structures, computer-executable instructions, and so forth. For the computer 1002, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, can also be used in the example operating environment, and further, that any such media can contain computer-executable instructions for performing the methods of the specification.

A number of program modules can be stored in the drives and RAM 1012, including an operating system 1030, one or more application programs 1032, other program modules 1034 and program data 1036. All or portions of the operating system, applications, modules, and/or data can also be cached in the RAM 1012. It is appreciated that the specification can be implemented with various proprietary or commercially available operating systems or combinations of operating systems.

A user can enter commands and information into the computer 1002 through one or more wired/wireless input devices, e.g., a keyboard 1038 and a pointing device, such as a mouse 1040. Other input devices (not shown) can include a microphone, an IR remote control, a joystick, a game pad, a stylus pen, touch screen, or the like. These and other input devices are often connected to the processing unit 1004 through an input device interface 1042 that is coupled to the system bus 1008, but can be connected by other interfaces, such as a parallel port, an IEEE 1394 serial port, a game port, a USB port, an IR interface, *etc.*

A monitor 1044 or other type of display device is also connected to the system bus 1008 *via* an interface, such as a video adapter 1046. In addition to the monitor 1044, a computer typically includes other peripheral output devices (not shown), such as speakers, printers, *etc.*

The computer 1002 can operate in a networked environment using logical connections *via* wired and/or wireless communications to one or more remote computers, such as a remote computer(s) 1048. The remote computer(s) 1048 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1050 is illustrated. The logical connections depicted include wired/wireless connectivity to a local area network (LAN) 1052 and/or larger networks, *e.g*., a wide area network (WAN) 1054. Such LAN and WAN networking environments are commonplace in offices and companies, and facilitate enterprise-wide computer networks, such as intranets, all of which can connect to a global communications network, *e.g*., the Internet.

When used in a LAN networking environment, the computer 1002 is connected to the local network 1052 through a wired and/or wireless communication network interface or adapter 1056. The adapter 1056 can facilitate wired or wireless communication to the LAN 1052, which can also include a wireless access point disposed thereon for communicating with the wireless adapter 1056.

When used in a WAN networking environment, the computer 1002 can include a modem 1058, or is connected to a communications server on the WAN 1054, or has other means for establishing communications over the WAN 1054, such as by way of the Internet. The modem 1058, which can be internal or external and a wired or wireless device, is connected to the system bus 1008 *via* the input device interface 1042. In a networked environment, program modules depicted relative to the computer 1002, or portions thereof, can be stored in the remote memory/storage device 1050. It will be appreciated that the network connections shown are example and other means of establishing a communications link between the computers can be used.

The computer 1002 is operable to communicate with any wireless devices or entities operatively disposed in wireless communication, *e.g*., a printer, scanner, desktop and/or portable computer, portable data assistant, communications satellite, any piece of equipment or location associated with a wirelessly detectable tag (*e.g.,* a kiosk, news stand, restroom), and telephone. This includes at least Wi-Fi and Bluetooth™ wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, *e.g*., computers, to send and receive data indoors and out; anywhere within the range of a base station. Wi-Fi networks use radio technologies called IEEE 802.11 (a, b, g, *etc*.) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11a) or 54 Mbps (802.11b) data rate, for example, or with products that contain both bands (dual band), so the networks can provide real-world performance similar to the basic 10BaseT wired Ethernet networks used in many offices.

The aforementioned systems have been described with respect to interaction among several components. It should be appreciated that such systems and components can include those components or sub-components specified therein, some of the specified components or sub-components, and/or additional components. Sub-components can also be implemented as components communicatively coupled to other components rather than included within parent components. Additionally, it should be noted that one or more components could be combined into a single component providing aggregate functionality. The components could also interact with one or more other components not specifically described herein but known by those of skill in the art.

What has been described above includes examples of the subject specification. It is, of course, not possible to describe every conceivable combination of components or methodologies for purposes of describing the subject specification, but one of ordinary skill in the art can recognize that many further combinations and permutations of the subject specification are possible. Accordingly, the subject specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**The following is a list of further preferred embodiments of the invention:**
Embodiment 1: A method for facilitating viewing visualization data, including:
   aggregating at least one visualization dataset from within a protected network;
   converting each of the at least one visualization datasets into a web-based file, each of the web-based files including at least one of the visualization datasets;
   storing each of the at least one visualization datasets and each of the web-based files within the protected network, each of the at least one visualization datasets and each of the web-based files being inaccessible from outside the protected network;
   sending a request to a host via the internet, the request requesting the host to send a reply corresponding to a desired visualization dataset;
   receiving the reply from the host via the internet; and
   pushing a desired web-based file and the desired visualization dataset out of the protected network via the internet as a function of the reply, where the selected web-based file is directed to the host and where the selected web-based file includes the desired visualization dataset.
Embodiment 2: The method of embodiment 1, where the pushing step further comprises pushing the desired web-based file or the desired visualization dataset through a proxy.
Embodiment 3: The method of embodiment 1, further comprising querying the plurality of sources for data corresponding to the desired visualization dataset.
Embodiment 4: The method of embodiment 3, further comprising dynamically updating the desired visualization dataset and the desired web-based file.
Embodiment 5: The method of embodiment 1, where the pushing step comprises determining whether the request meets a security standard.
Embodiment 6: The method of embodiment 5, further comprising assigning a first security standard to a first visualization dataset and a second security standard to a second visualization dataset, wherein the first security standard is different than the second security standard.
Embodiment 7: The method of embodiment 1, where the aggregating step further comprises aggregating a first visualization dataset from a first data source and aggregating a second visualization dataset from a second data source, the first data source and the second data source residing within the protected network.
Embodiment 8: The method of embodiment 1, where the converting step comprises converting a first visualization dataset into a first type of web-based file, and where the converting step further comprises converting a second visualization dataset into a second type of web-based file, and where the first type of web-based file and the second type of web-based file are different file formats.
Embodiment 9: A system executing on one or more processors for facilitating viewing visualization data, including:
   an aggregation component within a protected network, where the aggregation component is configured to receive at least one visualization dataset from within the protected network, and where the aggregation component is further configured to convert each of the visualization datasets into a web-based file, each of the web-based files including at least one of the visualization datasets, and where the aggregation component is further configured to store each of the visualization datasets and each of the web-based files within the protected network, each of the visualization datasets and each of the web-based files being inaccessible from outside the protected network, and where the aggregation component is further configured to send a request to a host via the internet, the request requesting the host to send a reply corresponding to a desired visualization dataset; and
   a push component coupled to the aggregation component and within the protected network, where the push component is configured to receive the reply from the host located outside the protected network, and where the push component is configured to upload a desired web-based file and the desired visualization dataset out of the protected network as a function of the reply, the desired web-based file being directed to the host and including the desired visualization dataset.
Embodiment 10: The system of embodiment 9, where the aggregation component is configured to query the at least one data source.
Embodiment 11: The system of embodiment 9, where the push component is configured to dynamically update the desired web-based file and the desired visualization dataset.
Embodiment 12: The system of embodiment 9, where the reply includes a set of security credentials, and where the push component is configured to evaluate the security credentials.
Embodiment 13: The system of embodiment 12, where the security credentials include a password.
Embodiment 14: The system of embodiment 9, where the push component is configured to push the desired web-based file and the desired visualization dataset through a proxy.
Embodiment 15: A system for facilitating viewing visualization data:
   means for collecting at least one visualization dataset from within a protected network;
   means for converting each of the at least one visualization datasets into a web-based file, each of the web-based files including at least one of the visualization datasets;
   means for securing each of the at least one visualization datasets and each of the web-based files within the protected network, each of the at least one visualization datasets and each of the web-based files being inaccessible from outside the protected network;
   means for sending a request to a host via the internet, the request requesting the host to send a reply corresponding to a desired visualization dataset;
   means for receiving the reply from the host via the internet; and
   means for uploading a desired web-based file and the desired visualization dataset onto the internet as a function of the reply, where the desired web-based file and the desired visualization dataset are directed to the host via a secure connection.
Embodiment 16: The system of embodiment 15, where the means for securing comprises configuring a firewall.
Embodiment 17: A system of embodiment 15, where the means for collecting comprises collecting a first visualization dataset from a first data source and collecting a second visualization dataset from a second data source, the first data source and the second data source residing within the protected network.
Embodiment 18: The system of embodiment 15, further comprising means for determining an availability for the desired visualization dataset.
Embodiment 19: The system of embodiment 15, further comprising means for dynamically updating the desired web-based file and the desired visualization dataset.
Embodiment 20: The system of embodiment 15, where the means for converting step further comprises means for converting the at least one visualization dataset into at least a first and second web-based file formats, the first and second web-based file formats being different.

## Claims

1. A method for facilitating viewing visualization data in a system (100) including a protected network (105), a web host (140), and a browser (150), including:
aggregating (602) at an aggregation appliance (120) within the protected network, at least one visualization dataset from within the protected network;
converting each of the at least one visualization datasets into a web-based file, each of the web-based files including at least one of the visualization datasets;
storing (604) each of the at least one visualization datasets and each of the web-based files within the protected network, each of the at least one visualization datasets and each of the web-based files being inaccessible from outside the protected network;
sending a request to the web host via the internet, the web host being outside of the protected network, the request requesting the web host to send a reply to the aggregation appliance, the reply indicating a desired visualization dataset;
receiving (606) at the aggregation appliance the reply from the host via the internet;
pushing (611; 804) a desired web-based file and the desired visualization dataset from the aggregation appliance out of the protected network via the internet as a function of the reply, where the selected web-based file is directed to the host and where the selected web-based file includes the desired visualization dataset;
determining (808) whether changes have occurred with respect to pushed files, the determining including receiving from the web host a list of files and version numbers currently being stored on the web host, and/or user-driven changes;
if updates are detected, updating (810) the file and looping back to pushing (804) an updated file to the web host.

2. The method of claim 1, where the pushing step further comprises pushing the desired web-based file or the desired visualization dataset through a proxy.

3. The method of claim 1, further comprising querying the plurality of sources for data corresponding to the desired visualization dataset, and dynamically updating the desired visualization dataset and the desired web-based file as a function of the reply received from said host.

4. The method of claim 1, where the pushing step comprises determining whether the request meets a security standard, and further comprising assigning a first security standard to a first visualization dataset and a second security standard to a second visualization dataset, wherein the first security standard is different than the second security standard.

5. The method of claim 1, where the aggregating step further comprises aggregating a first visualization dataset from a first data source and aggregating a second visualization dataset from a second data source, the first data source and the second data source residing within the protected network.

6. The method of claim 1, where the converting step comprises converting a first visualization dataset into a first type of web-based file, and where the converting step further comprises converting a second visualization dataset into a second type of web-based file, and where the first type of web-based file and the second type of web-based file are different file formats.

7. A system (100) executing on one or more processors for facilitating viewing visualization data, including:
an aggregation component (120; 302) within a protected network, where the aggregation component is configured to receive at least one visualization dataset from within the protected network, and where the aggregation component is further configured to convert each of the visualization datasets into a web-based file, each of the web-based files including at least one of the visualization datasets, and where the aggregation component is further configured to store each of the visualization datasets and each of the web-based files within the protected network, each of the visualization datasets and each of the web-based files being inaccessible from outside the protected network, and where the aggregation component is further configured to send a request to a host (140) via the internet, the host located outside of the protected network, the request requesting the host to send a reply, the reply indicating a desired visualization dataset, the aggregation component being further configured to determine (808) whether changes have occurred with respect to pushed files, the determining including receiving from the web host a list of files and version numbers currently being stored on the web host, and/or user-driven changes, and if updates are detected, update (810) the file; and
a push component (304) coupled to the aggregation component and within the protected network, where the push component is configured to receive the reply from the host, and where the push component is configured to upload a desired web-based file and the desired visualization dataset out of the protected network as a function of the reply, the desired web-based file being directed to the host and including the desired visualization dataset, the push component being further configured to push (804) an updated file to the web host.

8. The system of claim 7, where the aggregation component is configured to query the at least one data source.

9. The system of claim 7, where the push component is configured to dynamically update the desired web-based file and the desired visualization dataset, and/or to push the desired web-based file and the desired visualization dataset through a proxy.

10. The system of claim 7, where the reply includes a set of security credentials, and where the push component is configured to evaluate the security credentials, and where the security credentials include a password.

11. A system (100) including a protected network (105), a host (140), and a browser (150) for facilitating viewing visualization data, the system further comprising:
an aggregation appliance (120) within the protected network comprising:
means for collecting (402) at least one visualization dataset from within the protected network;
means for converting (406) each of the at least one visualization datasets into a web-based file, each of the web-based files including at least one of the visualization datasets;
means for securing each of the at least one visualization datasets and each of the web-based files within the protected network, each of the at least one visualization datasets and each of the web-based files being inaccessible from outside the protected network;
means for sending a request to a host via the internet, the host being located outside of the protected network, the request requesting the host to send a reply corresponding to a desired visualization dataset;
means for receiving (606) the reply from the host via the internet;
means for uploading (611) a desired web-based file and the desired visualization dataset onto the internet as a function of the reply, where the desired web-based file and the desired visualization dataset are directed to the host via a secure connection;
means for determining (808) whether changes have occurred with respect to pushed files, the determining including receiving from the host a list of files and version numbers currently being stored on the host, and/or user-driven changes; and
if updates are detected, updating (810) the file and pushing (804) the updated file to the host.

12. The system of claim 11, where the means for securing comprises configuring a firewall.

13. The system of claim 11, where the means for collecting comprises collecting a first visualization dataset from a first data source and collecting a second visualization dataset from a second data source, the first data source and the second data source residing within the protected network.

14. The system of claim 11, further comprising means for determining an availability for the desired visualization dataset, and/or further comprising means for dynamically updating the desired web-based file and the desired visualization dataset.

15. The system of claim 11, where the means for converting step further comprises means for converting the at least one visualization dataset into at least a first and second web-based file formats, the first and second web-based file formats being different.

## Patentansprüche

1. Verfahren zum Erleichtern der Darstellung von Visualisierungsdaten in einem System (100), das ein geschütztes Netzwerk (105), einen Web-Host (140) und einen Browser (150) beinhaltet, das beinhaltet:
Aggregieren (602), an einem Aggregationsgerät (120) in dem geschützten Netzwerk, von zumindest einem Visualisierungsdatensatz aus innerhalb des geschützten Netzwerks;
Konvertieren von jedem der mindestens einen Visualisierungsdatensätze zu einer webbasierten Datei, wobei jede der webbasierten Dateien mindestens einen der Visualisierungsdatensätze beinhaltet;
Speichern (604) von jedem der mindestens einen Visualisierungsdatensätze und jeder der webbasierten Dateien in dem geschützten Netzwerk, wobei auf jeden der mindestens einen Visualisierungsdatensätze und auf jede der webbasierten Dateien von außerhalb des geschützten Netzwerks kein Zugriff möglich ist;
Senden einer Anforderung an den Web-Host über das Internet, wobei sich der Web-Host außerhalb des geschützten Netzwerks befindet, und die Anforderung den Web-Host auffordert, eine Antwort an das Aggregationsgerät zu senden, wobei die Antwort einen erwünschten Visualisierungsdatensatz anzeigt;
Empfangen (606), an dem Aggregationsgerät, der Antwort von dem Host über das Internet;
Pushen (611; 804) einer erwünschten webbasierten Datei und des erwünschten Visualisierungsdatensatzes von dem Aggregationsgerät aus dem geschützten Netzwerk über das Internet als Funktion der Antwort, wobei die ausgewählte webbasierte Datei an den Host gerichtet ist und wobei die ausgewählte webbasierte Datei den erwünschten Visualisierungsdatensatz beinhaltet;
Bestimmen (808), ob Änderungen bezüglich gepushter Dateien aufgetreten sind, wobei das Bestimmen das Empfangen, von dem Web-Host, einer Liste von Dateien und von Versionsnummern beinhaltet, die kürzlich auf dem Web-Host gespeichert wurden, und/oder von Benutzern gesteuerten Änderungen;
wenn Updates ermittelt werden, Aktualisieren (810) der Datei und Zurückspringen zum Pushen (804) einer aktualisierten Datei an den Web-Host.

2. Verfahren nach Anspruch 1, wobei der Schritt zum Pushen des Weiteren das Pushen der erwünschten webbasierten Datei oder des erwünschten Visualisierungsdatensatzes durch einen Proxy umfasst.

3. Verfahren Anspruch 1, des Weiteren umfassend das Abfragen der Vielzahl von Quellen nach Daten entsprechend dem erwünschten Visualisierungsdatensatz, und dynamisches Aktualisieren des erwünschten Visualisierungsdatensatzes und der erwünschten webbasierten Datei als Funktion der Antwort, die von dem Host empfangen wird.

4. Verfahren nach Anspruch 1, wobei der Schritt zum Pushen das Bestimmen umfasst, ob die Anforderung einen Sicherheitsstandard erfüllt, und des Weiteren umfassend das Zuweisen eines ersten Sicherheitsstandards zu einem ersten Visualisierungsdatensatz und eines zweiten Sicherheitsstandards zu einem zweiten Visualisierungsdatensatz, wobei sich der erste Visualisierungsdatensatz von dem zweiten Visualisierungsdatensatz unterscheidet.

5. Verfahren nach Anspruch 1, wobei der Schritt zum Aggregieren des Weiteren das Aggregieren eines ersten Visualisierungsdatensatzes von einer ersten Datenquelle und das Aggregieren eines zweiten Visualisierungsdatensatzes von einer zweiten Datenquelle umfasst, wobei die erste Datenquelle und die zweite Datenquelle in dem geschützten Netzwerk vorhanden sind.

6. Verfahren nach Anspruch 1, wobei der Schritt zum Konvertieren das Konvertieren eines ersten Visualisierungsdatensatzes zu einem ersten Typ einer webbasierten Datei umfasst, und wobei der Schritt zum Konvertieren des Weiteren das Konvertieren eines zweiten Visualisierungsdatensatzes zu einem zweiten Typ von webbasierter Datei umfasst, und wobei der erste Typ von webbasierter Datei und der zweite Typ von webbasierter Datei unterschiedliche Dateiformate sind.

7. System (100), das auf einem oder mehreren Prozessoren zum Erleichtern der Darstellung von Visualisierungsdaten ausgeführt wird, das beinhaltet:
eine Aggregationskomponente (120; 302) in einem geschützten Netzwerk, wobei die Aggregationskomponente dazu konfiguriert ist, mindestens einen Visualisierungsdatensatz aus dem geschützten Netzwerk zu empfangen, und wobei die Aggregationskomponente des Weiteren dazu konfiguriert ist, jeden der Visualisierungsdatensätze zu einer webbasierten Datei zu konvertieren, wobei jede der webbasierten Dateien mindestens einen der Visualisierungsdatensätze beinhaltet, und wobei die Aggregationskomponente des Weiteren dazu konfiguriert ist, jeden der Visualisierungsdatensätze und jede der webbasierten Dateien in dem geschützten Netzwerk zu speichern, wobei auf jeden der Visualisierungsdatensätze und auf jede der webbasierten Dateien von außerhalb des geschützten Netzwerks kein Zugriff möglich ist, und wobei die Aggregationskomponente des Weiteren dazu konfiguriert ist, eine Anforderung an einen Host (140) über das Internet zu senden, wobei sich der Host außerhalb des geschützten Netzwerks befindet, wobei die Anforderung den Host dazu auffordert, eine Antwort zu senden, wobei die Antwort einen erwünschten Visualisierungsdatensatz anzeigt, wobei die Aggregationskomponente des Weiteren dazu konfiguriert ist, zu bestimmen (808), ob Änderungen bezüglich gepushter Dateien aufgetreten sind, wobei das Bestimmen das Empfangen, von dem Web-Host, einer Liste von Dateien und Versionsnummern beinhaltet, die gegenwärtig auf dem Web-Host gespeichert sind, und/oder von Benutzern gesteuerten Änderungen, und wenn Updates ermittelt werden, Aktualisieren (810) der Datei; und
eine Push-Komponente (304), die mit der Aggregationskomponente verbunden und in dem geschützten Netzwerk angeordnet ist, wobei die Push-Komponente dazu konfiguriert ist, die Antwort von dem Host zu empfangen, und wobei die Push-Komponente dazu konfiguriert ist, eine erwünschte webbasierte Datei und den erwünschten Visualisierungsdatensatz aus dem geschützten Netzwerk als Funktion der Antwort hochzuladen, wobei die erwünschte webbasierte Datei an den Host gerichtet ist und den erwünschten Visualisierungsdatensatz enthält, wobei die Push-Komponente des Weiteren dazu konfiguriert ist, eine aktualisierte Datei an den Web-Host zu pushen (804).

8. System nach Anspruch 7, wobei die Aggregationskomponente dazu konfiguriert ist, die mindestens eine Datenquelle abzufragen.

9. System nach Anspruch 7, wobei die Push-Komponente dazu konfiguriert ist, die erwünschte webbasierte Datei und den erwünschten Visualisierungsdatensatz dynamisch zu aktualisieren, und/oder die erwünschte webbasierte Datei und den erwünschten Visualisierungsdatensatz durch einen Proxy zu pushen.

10. System nach Anspruch 7, wobei die Antwort einen Satz aus Sicherheitsanmeldeinformationen beinhaltet, und wobei die Push-Komponente dazu konfiguriert ist, die Sicherheitsanmeldeinformationen zu evaluieren, und wobei die Sicherheitsanmeldeinformationen ein Passwort beinhalten.

11. System (100), das ein geschütztes Netzwerk (105), einen Host (140) und einen Browser (150) zum Erleichtern der Darstellung von Visualisierungsdaten beinhaltet, wobei das System des Weiteren umfasst:
ein Aggregationsgerät (120) in dem geschützten Netzwerk, umfassend:
ein Mittel zum Erfassen (402) von mindestens einem Visualisierungsdatensatz aus dem geschützten Netzwerk;
ein Mittel zum Konvertieren (406) von jedem der mindestens einen Visualisierungsdatensätze zu einer webbasierten Datei, wobei jede der webbasierten Dateien mindestens einen der Visualisierungsdatensätze beinhaltet;
ein Mittel zum Speichern von jedem der mindestens einen Visualisierungsdatensätze und jeder der webbasierten Dateien in dem geschützten Netzwerk, wobei auf jeden der mindestens einen Visualisierungsdatensätze und auf jede der webbasierten Dateien von außerhalb des geschützten Netzwerks kein Zugriff möglich ist;
ein Mittel zum Senden einer Anforderung an einen Host über das Internet, wobei sich der Host außerhalb des geschützten Netzwerks befindet, und die Anforderung den Host auffordert, eine Antwort entsprechend einem erwünschten Visualisierungsdatensatz zu senden;
ein Mittel zum Empfangen (606) der Antwort von dem Host über das Internet;
ein Mittel zum Hochladen (611) einer erwünschten webbasierten Datei und des erwünschten Visualisierungsdatensatzes in das Internet als Funktion der Antwort, wobei die erwünschte webbasierte Datei und der erwünschte Visualisierungsdatensatz über eine sichere Verbindung an den Host gerichtet sind;
ein Mittel zum Bestimmen (808), ob Änderungen bezüglich gepushter Dateien aufgetreten sind, wobei das Bestimmen das Empfangen, von dem Host, einer Liste von Dateien und von Versionsnummern beinhaltet, die kürzlich auf dem Host gespeichert wurden, und/oder von Benutzern gesteuerten Änderungen;
wenn Updates ermittelt werden, Aktualisieren (810) der Datei und Pushen (804) der aktualisierten Datei an den Host.

12. System nach Anspruch 11, wobei das Mittel zum Sichern das Konfigurieren einer Firewall umfasst.

13. System nach Anspruch 11, wobei das Mittel zum Erfassen das Erfassen eines ersten Visualisierungsdatensatzes von einer ersten Datenquelle und das Erfassen eines zweiten Visualisierungsdatensatzes von einer zweiten Datenquelle umfasst, wobei die erste Datenquelle und die zweite Datenquelle in dem geschützten Netzwerk vorhanden sind.

14. System nach Anspruch 11, des Weiteren umfassend ein Mittel zum Bestimmen einer Verfügbarkeit des erwünschten Visualisierungsdatensatzes, und/oder des Weiteren umfassend ein Mittel zum dynamischen Aktualisieren der erwünschten webbasierten Datei und des erwünschten Visualisierungsdatensatzes.

15. System nach Anspruch 11, wobei das Mittel für den Konvertierungsschritt des Weiteren ein Mittel zum Konvertieren des mindestens einen Visualisierungsdatensatzes zu mindestens einem ersten und einem zweiten webbasierten Dateiformat umfasst, wobei sich das erste und das zweite webbasierte Dateiformat unterscheiden.

## Revendications

1. Procédé pour faciliter la consultation de données de visualisation dans un système (100) incluant un réseau protégé (105), un hôte Web (140), et un navigateur (150), incluant :
l'agrégation (602) au niveau d'un appareil d'agrégation (120) au sein du réseau protégé, d'au moins un ensemble de données de visualisation issu de l'intérieur du réseau protégé ;
la conversion de chacun de l'au moins un d'ensembles de données de visualisation en un fichier Web, chacun des fichiers Web incluant au moins un des ensembles de données de visualisation ;
le stockage (604) de chacun de l'au moins un d'ensembles de données de visualisation et de chacun des fichiers Web au sein du réseau protégé, chacun de l'au moins un d'ensembles de données de visualisation et chacun des fichiers Web étant inaccessibles depuis l'extérieur du réseau protégé ;
l'envoi d'une requête à l'hôte Web via Internet, l'hôte Web se trouvant à l'extérieur du réseau protégé, la requête sollicitant de l'hôte Web l'envoi d'une réponse à l'appareil d'agrégation, la réponse indiquant un ensemble de données de visualisation souhaité ;
la réception (606) au niveau de l'appareil d'agrégation de la réponse provenant de l'hôte via Internet ;
la transmission (611 ; 804) d'un fichier Web souhaité et de l'ensemble de données de visualisation souhaité provenant de l'appareil d'agrégation hors du réseau protégé via Internet en tant que fonction de la réponse, où le fichier Web sélectionné est dirigé vers l'hôte et où le fichier Web sélectionné comprend l'ensemble de données de visualisation souhaité ;
la détermination (808) quant à savoir si des modifications ont ou non eu lieu au niveau des fichiers transmis, la détermination incluant la réception en provenance de l'hôte Web d'une liste de fichiers et de numéros de version en cours de stockage sur l'hôte Web, et/ou de modifications par un utilisateur ;
si des mises à jour sont détectées, la mise à jour (810) du fichier et une rétroaction pour la transmission (804) d'un fichier mis à jour à l'hôte Web.

2. Le procédé de la revendication 1, où l'étape de transmission comprend en outre la transmission du fichier Web souhaité ou de l'ensemble de données de visualisation souhaité via un dispositif de délégation, ou proxy.

3. Le procédé de la revendication 1, comprenant en outre l'interrogation de la pluralité de sources pour des données correspondant à l'ensemble de données de visualisation souhaité, et la mise à jour dynamiquement de l'ensemble de données de visualisation souhaité et du fichier Web souhaité en tant que fonction de la réponse reçu d'un dit hôte.

4. Le procédé de la revendication 1, dans lequel l'étape de transmission comprend la détermination quant à savoir si la requête satisfait à une norme de sécurité, et comprenant en outre l'affectation d'une première norme de sécurité à un premier ensemble de données de visualisation et d'une deuxième norme de sécurité à un deuxième ensemble de données de visualisation, dans lequel la première norme de sécurité est différente de la deuxième norme de sécurité.

5. Le procédé de la revendication 1, où l'étape d'agrégation comprend en outre l'agrégation d'un premier ensemble de données de visualisation issu d'une première source de données et l'agrégation d'un deuxième ensemble de données de visualisation issu d'une deuxième source de données, la première source de données et la deuxième source de données résidant au sein du réseau protégé.

6. Le procédé de la revendication 1, où l'étape de conversion comprend la conversion d'un premier ensemble de données de visualisation en un premier type de fichier Web, et où l'étape de conversion comprend en outre la conversion d'un deuxième ensemble de données de visualisation en un deuxième type de fichier Web, et où le premier type de fichier Web et le deuxième type de fichier Web sont des formats de fichier différents.

7. Système (100) s'exécutant sur un ou plusieurs processeurs pour faciliter la consultation de données de visualisation, notamment :
un composant d'agrégation (120 ; 302) au sein d'un réseau protégé, où le composant d'agrégation est configuré pour recevoir au moins un ensemble de données de visualisation issu de l'intérieur du réseau protégé, et où le composant d'agrégation est configuré en outre pour convertir chacun des ensembles de données de visualisation en un fichier Web, chacun des fichiers Web incluant au moins un des ensembles de données de visualisation, et où le composant d'agrégation est configuré en outre pour stocker chacun des ensembles de données de visualisation et chacun des fichiers Web au sein du réseau protégé, chacun des ensembles de données de visualisation et chacun des fichiers Web étant inaccessibles depuis l'extérieur du réseau protégé, et où le composant d'agrégation est configuré en outre pour envoyer une requête à un hôte (140) via Internet, l'hôte présent hors du réseau protégé, la requête sollicitant de l'hôte l'envoi d'une réponse, la réponse indiquant un ensemble de données de visualisation souhaité, le composant d'agrégation étant configuré en outre pour déterminer (808) si des modifications se sont produites au niveau des fichiers transmis, la détermination incluant la réception en provenance de l'hôte Web d'une liste de fichiers et de numéros de version en cours de stockage sur l'hôte Web, et/ou de modifications par un utilisateur, et si des mises à jour sont détectées, une mise à jour (810) du fichier ; et
un composant de transmission (304) couplé au composant d'agrégation et au sein du réseau privé, où le composant de transmission est configuré pour recevoir la réponse de l'hôte, et où le composant de transmission est configuré pour télécharger un fichier Web souhaité et l'ensemble de données de visualisation souhaité hors du réseau protégé en tant que fonction de la réponse, le fichier Web souhaité étant dirigé vers l'hôte et incluant l'ensemble de données de visualisation souhaité, le composant de transmission étant en outre configuré pour transmettre (804) un fichier mis à jour à l'hôte Web.

8. Le système de la revendication 7, où le composant d'agrégation est configuré pour interroger l'au moins une source de données.

9. Le système de la revendication 7, où le composant de transmission est configuré pour mettre à jour dynamiquement le fichier Web souhaité et l'ensemble de données de visualisation souhaité, et/ou pour transmettre le fichier Web souhaité et l'ensemble de données de visualisation souhaité via un dispositif de délégation, ou proxy.

10. Le système de la revendication 7, où la réponse comprend un ensemble d'accréditations de sécurité, et où le composant de transmission est configuré pour évaluer les accréditations de sécurité, et où les accréditations de sécurité comprennent un mot de passe.

11. Système (100) incluant un réseau protégé (105), un hôte (140), et un navigateur (150) pour faciliter la consultation de données de visualisation, le système comprenant en outre :
un appareil d'agrégation (120) au sein du réseau protégé comprenant :
un moyen de collecter (402) au moins un ensemble de données de visualisation issu de l'intérieur du réseau protégé ;
un moyen de conversion (406) de chacun de l' au moins un d'ensembles de données de visualisation en un fichier Web, chacun des fichiers Web incluant au moins un des ensembles de données de visualisation ;
un moyen de sécurisation de chacun de l'au moins un d'ensembles de données de visualisation et de chacun des fichiers Web au sein du réseau protégé, chacun de l'au moins un d'ensembles de données de visualisation et de chacun des fichiers Web étant inaccessibles depuis l'extérieur du réseau protégé ;
un moyen d'envoi d'une requête à un hôte via Internet, l'hôte se trouvant à l'extérieur du réseau protégé, la requête sollicitant de l'hôte l'envoi d'une réponse correspondant à un ensemble de données de visualisation souhaité ;
un moyen de réception (606) de la réponse provenant de l'hôte via Internet ;
un moyen de téléchargement (611) d'un fichier Web souhaité et de l'ensemble de données de visualisation souhaité vers Internet en tant que fonction de la réponse, où le fichier Web souhaité et l'ensemble de données de visualisation souhaité sont dirigés vers l'hôte via une connexion sécurisée ;
un moyen de détermination (808) quant à savoir si des changements se sont ou non produits au niveau de fichiers transmis, la détermination incluant la réception en provenance de l'hôte d'une liste de fichiers et de numéros de version en cours de stockage sur l'hôte, et/ou de modifications par un utilisateur ; et
si des mises à jour sont détectées, la mise à jour (810) du fichier et une transmission (804) du fichier mis à jour à l'hôte.

12. Le système de la revendication 11, où le moyen de sécurisation comprend la configuration d'un pare-feu.

13. Le système de la revendication 11, où le moyen de collecte comprend la collecte d'un premier ensemble de données de visualisation à partir d'une première source de données et la collecte d'un deuxième ensemble de données de visualisation à partir d'une deuxième source de données, la première source de données et la deuxième source de données résidant au sein du réseau protégé.

14. Le système de la revendication 11, comprenant en outre un moyen de détermination d'une disponibilité pour l'ensemble de données de visualisation souhaité, et/ou comprenant en outre un moyen de mettre à jour dynamiquement le fichier Web souhaité et l'ensemble de données de visualisation souhaité.

15. Le système de la revendication 11, où le moyen d'une l'étape de conversion comprend en outre un moyen de conversion de l'au moins un ensemble de données de visualisation en au moins un premier et un deuxième formats de fichier Web, le premier et le deuxième formats de fichier Web étant différents.
